# EUROPEAN PATENT APPLICATION

(11) **EP 3 842 188 A1**
(43) Date of publication of application: **30.06.2021**
(21) Application number: 19852389.6
(22) Date of filing: 14.08.2019
(51) Int. Cl.: B25J 3/00

(54) **ROBOT ASSISTANCE DEVICE AND ROBOT ASSISTANCE SYSTEM**

(30) Priority: 24.08.2018 JP 2018157616
(71) Applicant: The University of Tokyo, Bunkyo-ku, Tokyo 113-8654 (JP)
(72) Inventor: HUANG Shouren, Tokyo 113-8654 (JP); ISHIKAWA Masatoshi, Tokyo 113-8654 (JP); YAMAKAWA Yuji, Tokyo 113-8654 (JP)
(74) Representative: Isarpatent
(86) International application number: PCT/JP2019/031924
(87) International publication number: WO 2020/040015

(57) **Abstract**

Provided are a robot assistance device and a robot assistance system capable of expanding the accuracy of human movement while completely maintaining human cognition and safety. According to an embodiment of the present invention, there is provided a robot assistance device, comprising: an operation unit and an operated portion that are non-electrically connected to each other, wherein: a user is able to displace a target position defined by the operated portion while having self-awareness by operating the operation unit; a sensor unit provided on a drive unit and configured to acquire a feature information regarding a predetermined trajectory about a displacement of the target position, and the drive unit provided on the operated portion and configured to be driven so as to correct a deviation of the target position from the predetermined trajectory based on a control signal determined based on the feature information.

## Description

### TECHNICAL FIELD

The present invention relates to a robot assistance device and a robot assistance system.

### BACKGROUND ART

In the industrial field and the medical field, there are many situations in which human beings perform tasks involving predetermined movements by using their hands or the like based on their own cognition. However, the accuracy of human movement is limited due to, for example, hand tremor and body operating frequency. On the other hand, especially in situations where human cognition and experience are important, there are circumstances in which master-slave type robots (Patent Document 1) that disregard human cognition as well as complete automation by robots are not inclined to be adopted. In addition, it is conceivable that an unintended operation may occur due to a runaway of the robot, or in some cases, a physical danger may occur to the user who is operating due to such an unintended operation.

### PRIOR ART DOCUMENTS

### Patent Document

[Patent Document 1] Japanese Patent No. 5032716

### SUMMARY OF INVENTION

The present invention has been made in view of the above circumstances and provides a robot assistance device and a robot assistance system capable of expanding the accuracy of human movement while maintaining human cognition and safety completely.

### Means for Solving Problems

The present invention provides a robot assistance device, comprising: an operation unit and an operated portion that are non-electrically connected to each other, wherein: a user is able to displace a target position defined by the operated portion while having self-awareness by operating the operation unit; a sensor unit provided on a drive unit and configured to acquire a feature information regarding a predetermined trajectory about a displacement of the target position, and the drive unit provided on the operated portion and configured to be driven so as to correct a deviation of the target position from the predetermined trajectory based on a control signal determined based on the feature information.

It should be noted that the robot assistance device according to the present invention comprises the operation unit and the operated portion that are non-electrically connected to each other and is configured so that the user is able to displace a target position defined by the operated portion while having self-awareness by operating the operation unit, and is configured so as to correct a deviation of the target position from the predetermined trajectory based on a control signal determined based on the feature information. That is, an approximate positioning control is performed by the user via the operation unit (low frequency), and a detailed positioning control exceeding the limit of human accuracy (high frequency) is performed by the robot. According to the robot assistance device having such a configuration, to expend the accuracy of human movement while maintaining human cognition completely is achieved. In addition, since the operation unit and the operated portion are non-electrically connected (for instance, physically integrated) and the stroke of the drive unit can be reduced to a degree sufficient to correct the deviation, physical contact to the user can be avoided. In other words, to reduce the physical danger to the user as much as possible is also achieved.

### BRIEF DESCRIPTION OF DRAWINGS

FIG. 1 is a schematic configuration diagram of a robot assistance system according to the first to fourth embodiments.
FIG. 2 is a diagram showing an aspect in which a relative position of an imaging unit is changed by a drive unit in an operated portion of the robot assistance system according to the first to fourth embodiments.
FIG. 3 is a schematic view of an image captured by the imaging unit.
FIG. 4 is an operation flow of the robot assistance system according to the first to fourth embodiments.
FIG. 5 is a photograph showing an example of the robot assistance system according to the first embodiment.
FIG. 6 is a photograph showing an example of the robot assistance system according to the second embodiment.
FIG. 7 is a schematic view showing an example of the robot assistance system according to the third embodiment.
FIG. 8 is a schematic view showing an example of the robot assistance system according to the fourth embodiment.

### DESCRIPTION OF EMBODIMENTS

Hereinafter, embodiments of the present invention will be described with reference to the drawings. Various features described in the embodiment below can be combined with each other. Especially in the present specification, the "unit" may include, for instance, a combination of hardware resources implemented by circuits in a broad sense and information processing of software that can be concretely realized by these hardware resources (for example, image processing unit 31 and a control signal generation unit 32 and the like). Furthermore, although various information is performed in the present embodiments, these information are represented by high and low signal values as a bit set of binary numbers composed of 0 or 1, and communication/calculation can be executed on a circuit in a broad sense.

Further, a circuit in a broad sense is a circuit realized by at least appropriately combining a circuit, a circuitry, a processor, a memory, and the like. That is, an application special integrated circuit (ASIC), a programmable logic device (for example, a simple programmable logic device (SPLD)), a complex programmable logic device (CLPD), a field programmable gate array (FPGA), and the like.

### 1. Overall Configuration

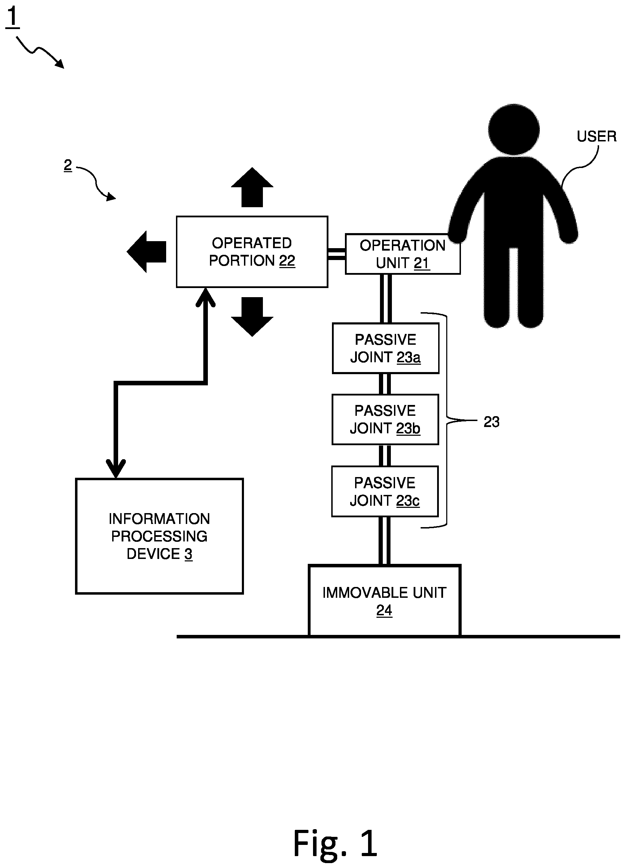

FIG. 1 is a schematic configuration diagram of a robot assistance system according to the first to fourth embodiments. A robot assistance system 1 is composed of a robot assistance device 2 capable of expanding the accuracy of human movement while maintaining human cognition and safety completely and an information processing device 3, and the robot assistance device 2 and the information processing device 3 are electrically connected to each other.

### 1.1 Robot Assistance Device 2

The robot assistance device 2 includes an operation unit 21, an operated portion 22, passive joints 23 (here, passive joints 23a∼23c as an example), and an immovable unit 24, and these components are mechanically and non-electrically connected. Hereinafter, each component will be further described.

### <Operation Unit 21>

The operation unit 21 is used to displace the position of the operated portion 22 by the user. For instance, the operation unit 21 is configured so that the user can grip it by hand. Alternatively, the operation unit 21 may be configured so that the user can wear the operation unit 21 like a glove. Especially it should be noted that the operation unit 21 is mechanically and non-electrically connected to the operated portion 22, and the user can displace the position of the operated portion 22 while maintaining self-awareness. In the present embodiment, "maintaining self-awareness" may be considered as the user maintains the sense of moving the operated portion 22 by his/her own hand.

### <Operated Portion 22>

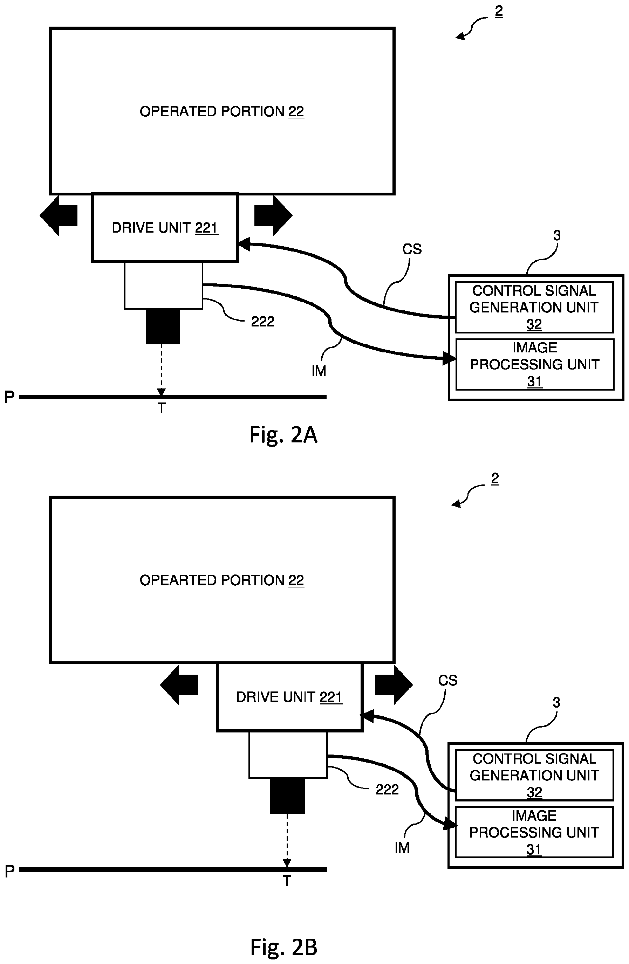

The operated portion 22 is configured so that the position thereof is displaced when the user operates the operation unit 21 as described above. As will be described in more details later, when using the robot assistance device 2, the user executes a task of displacing the target position T (see FIGS. 2A and 2B) on the operated portion 22 follow a predetermined trajectory by operating the operation unit 21. The details of the operated portion 22 will be described in Section 1.2.

### <Passive Joints 23a∼23c>

The passive joints 23a∼23c are provided between the operation unit 21 and the immovable unit 24. The passive joints 23a∼23c are joint mechanisms for giving a degree of freedom to the operation unit 21 with respect to the immovable unit 24 (a unit that is fixed and immobile in principle as described later) and is not actively driven by a motor. With such a configuration, the user can manually operate the operation unit 21 as described above. The number of passive joints is merely an example and is not limited to this.

### <Immovable Unit 24>

The immovable unit 24 is a part of the robot assistance device 2 and is a part to be placed or fixed at the installation location. The method for fixing is not particularly limited, and it may be fixed with screws or the like, or it may be fixed with an attractive force by a magnet. In any case, it should be noted that the operating unit 21 and the operated portion 22 can be displaced relative to the immovable unit 24.

### 1.2 Operated Portion 22

In the operated portion 22 of the robot assistance device 2 in the robot assistance system 1, FIGS. 2A and 2B show aspects in which the relative position of the imaging unit 222 is changed by the drive unit 221. With reference to such figures, the components of the operated portion 22 will be described in detail.

### <Drive Unit 221>

The drive unit 221 is provided on the operated portion 22, and is, for example, a biaxial actuator mechanism that can move in parallel. In FIGS. 2A and 2B, although the drive unit 221 is displaced in the left-right direction, since it has two axes, it can also be displaced in the front-back direction with respect to the paper surface. Further, even though it is unshown, a degree of freedom of rotation may be applied. Further, it should be noted that the predetermined position defined by the operated portion 22, or more accurately, the predetermined position defined by the displacement of the drive unit 221 is defined as the "target position T". In FIGS. 2A and 2B, the imaging unit 222 is provided on the drive unit 221. For example, the intersection of the visual line of the imaging unit 222 (in other words, the center of the image captured by the imaging unit 222) and the defined plane P is defined as the target position T. As shown in FIGS. 2A and 2B, the target position T can be displaced by displacing the drive unit 221.

### <Imaging Unit 222>

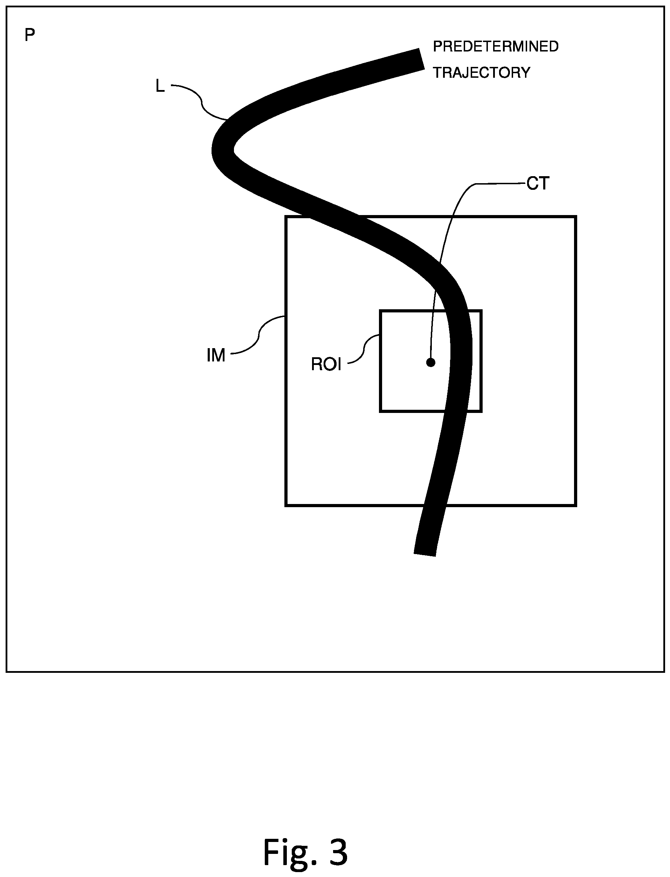

The imaging unit 222 (an example of a "sensor unit" in the claims) is a so-called vision sensor (camera) configured to acquire external information as an image. Especially as shown in FIG. 3, it is preferable that the image IM acquired by the imaging unit 222 includes the line L drawn on the defined plane P. The line L is for visualizing a predetermined trajectory according to the target position T described above. The imaging unit 222 employs a camera having a high imaging rate (frame rate) referred to as so-called high-speed vision. The frame rate is, for example, 100 fps or more, preferably 250 fps or more, more preferably 500 fps or 1000 fps. Specifically, for example, the frame rate may be 100, 200, 300, 400, 500, 600, 700, 800, 900, 1000, 1100, 1200, 1300, 1400, 1500, 1600, 1700, 1800, 1900, 2000 fps, and may be within a range between any two of the numerical values illustrated herein. As will be described in more detail later, in order to correct the deviation (error) between the target position T and the aforementioned predetermined trajectory only by the feedback control without using any prediction, a high frame rate of the imaging unit 222 is important. It should be noted that the imaging unit 222 is only an example of a sensor unit, and other sensors may be used. However, in the present embodiment, other components (for example, the image processing unit 31 to be described later) will be described on the assumption of the imaging unit 222.

### 1.3 Information Processing Device 3

The information processing device 3 includes a storage unit and a control unit (not shown). The storage unit is a storage device such as a solid state drive (SSD), or a random access memory (RAM) that stores temporarily necessary information (arguments, arrays, etc.) related to program operations and the like can be implemented as a memory. Moreover, combinations thereof may be used. The control unit can be implemented as, for example, a central processing unit (CPU). The control unit realizes various functions related to the robot assist system 1 by reading a predetermined program stored in the storage unit.

Further, the information processing device 3 is a wired communication means such as USB, IEEE1394, Thunderbolt, wired LAN network communication, or wireless communication means such as wireless LAN network communication, mobile communication such as LTE/3G, Bluetooth (registered trademark) communication. By having the means as needed, it is preferable that the device can be connected to an external device. In particular, it is preferable that the robot assist device 2 is configured to be communicable according to a dedicated communication standard (for example, a camera link or the like if it is between the imaging unit 222).

Here, the control unit (not shown) in the information processing device 3 includes an image processing unit 31 and a control signal generation unit 32 as shown in FIGS. 2A and 2B in terms of functionality. Hereinafter, each component will be further described.

### <Image Processing Unit 31>

The image processing unit 31 performs image processing on the image IM received from the imaging unit 222 in the robot assistance device 2 to distinguish between the line L and an area other than the line L. This is performed, for example, by binarizing the captured image IM by determining a threshold value based on a predetermined parameter (brightness or the like) related to the image. Then, the deviation of the target position T from the predetermined trajectory (line L) can be measured by calculating the position of the center of gravity of the line L (an example of "feature information" in the claims) from the image IM. For example, as shown in FIGS. 2A and 2B, when the target position T is the intersection (image center CT) between the visual line of the imaging unit 222 and the defined plane P, the deviation between the center of gravity of the line L and the center of the image IM in the image IM may be measured. By setting the image center CT as the target position T, it is possible to perform imaging follow an accurate trajectory by correcting the deviation, and therefore, for example, application to a part inspection of a factory or the like can be expected.

As shown in FIG. 3, the above-described image processing may be performed on a predetermined region ROI of a part of the image IM. In particular, in order to perform the correction of the deviation at a high control rate, the line L is in the vicinity of a predetermined position (for example, the image center CT) of the image IM, and the number of pixels subjected to image processing can be reduced by setting a vicinity region of the fixed position as the predetermined region ROI. As a result, the load of the image processing calculation in the information processing device 3 can be reduced, and the deviation correction at a high control rate can be maintained or performed.

### <Control Signal Generation Unit 32>

The control signal generation unit 32 generates a control signal CS that drives (that is, displaces as desired) the drive unit 221 in the robot assistance device 2, and transmits the control signal to the drive unit 221 via a communication interface (not shown). Here, the control signal CS is determined based on the deviation from the predetermined trajectory (line L) of the target position T (measured by the image processing unit 31 described above). The control method in this case is not particularly limited, for example, P control, PD control, PID control and the like can be appropriately adopted. A preferable value may be set for each coefficient related to the control, if necessary. Further, the value of the control signal CS may be defined by the voltage.

The drive rate for driving the drive unit 221 (control signal generation rate of the control signal generation unit 32) is preferably as high as the imaging rate in the imaging unit 222. For example, it is 100 hertz or more, preferably 250 hertz or more, and more preferably 500 hertz or 1000 hertz. Specifically, for example, it may be 100, 200, 300, 400, 500, 600, 700, 800, 900, 1000, 1100, 1200, 1300, 1400, 1500, 1600, 1700, 1800, 1900, 2000 hertz, and may be in the range between any two of the numerical values exemplified here.

More specifically, in the robot assistance system 1 as a whole, the lower one of the imaging rate of the imaging unit 222 and the driving rate of the driving unit 221 act as the control rates related to the correction of the deviation. In other words, by increasing the imaging rate and the drive rate to the same extent, it is possible to correct the deviation between the target position T and the above-mentioned predetermined trajectory only by feedback control without using any prediction.

### 2. Operation Flow of Robot Assistance System 1

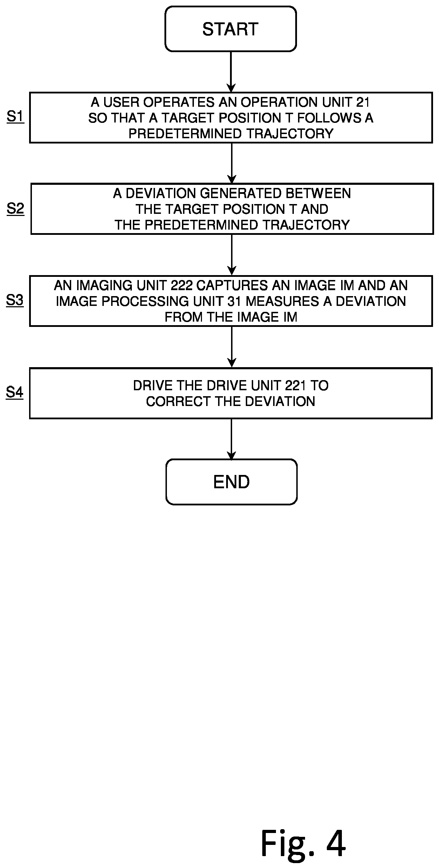

In Section 2, the operation flow of the robot assistance system 1 having the above-described configuration will be described. Hereinafter, steps S1 to S4 in FIG. 4 will be described.

### [Start]

### (Step S1)

The user grasps the operation unit 21 and displaces the operated portion 22 to make the target position T related to the operated portion 22 follow a predetermined trajectory (line L drawn on the defined plane P) while having self-awareness. That is, such an operation is performed by a low frequency control called manual (continue to step S2).

### (Step S2)

A human user has a limit of accuracy, and it is virtually impossible to make the target position T follow a predetermined trajectory almost without deviation, and a deviation occurs between the target position T and the predetermined trajectory (continued to step S3).

### (Step S3)

The imaging unit 222 images the defined plane P so as to include the line L. The captured image IM is transmitted to the information processing device 3, and image processing is executed by the image processing unit 31. As a result, the deviation between the target position T and the predetermined trajectory is measured (continue to step S3).

### (Step S4)

Based on the deviation measured by Step S3, the control signal generation unit 32 determines the value of the control signal CS for driving the drive unit 221. As a result, the drive unit 221 is displaced so as to correct the deviation. More specifically, in steps S3 and S4, by high-speed visual feedback using the imaging unit 222, the deviation is corrected in a very short time (for example, a delay of several hundred microseconds to several tens of milliseconds) which the user is not aware of.

### [End]

By repeating steps S1 to S4, it is possible for the user to accurately perform the task that make the target position T follow the predetermined trajectory while having self-awareness. That is, the user has the sense to perform accurate task rather than being conscious of the correction. Further, since the operation unit 21 and the operated portion 22 are non-electrically connected to each other, the operated portion 22 does not perform an unintended operation contrary to the operation of operation unit 21, and in some cases, there is no physical danger to the user operating by such an unintended operation. Furthermore, since the stroke of the drive unit 221 can be reduced to a degree sufficient to correct the deviation, physical contact to the user can be avoided even in this case and safety is secured.

Of course, it should be noted that a manual operation is required to the extent that the line L is included in the image IM (or a predetermined region ROI that is a part thereof), and the stroke of the displacement of the drive unit 221 is necessary to correct the deviation.

### 3. Information Presentation Related to Target Position T to User

In order to execute the task of making the target position T follow the predetermined trajectory while having a higher self-awareness by the user, it is preferable that the user himself/herself can acquire the information related to the current target position T. Therefore, it is preferable that the robot assistance system 1 further includes the following components. Hereinafter, the first to fourth embodiments will be described in detail. Of course, the components related to each embodiment may be combined and implemented.

### 3.1 First Embodiment

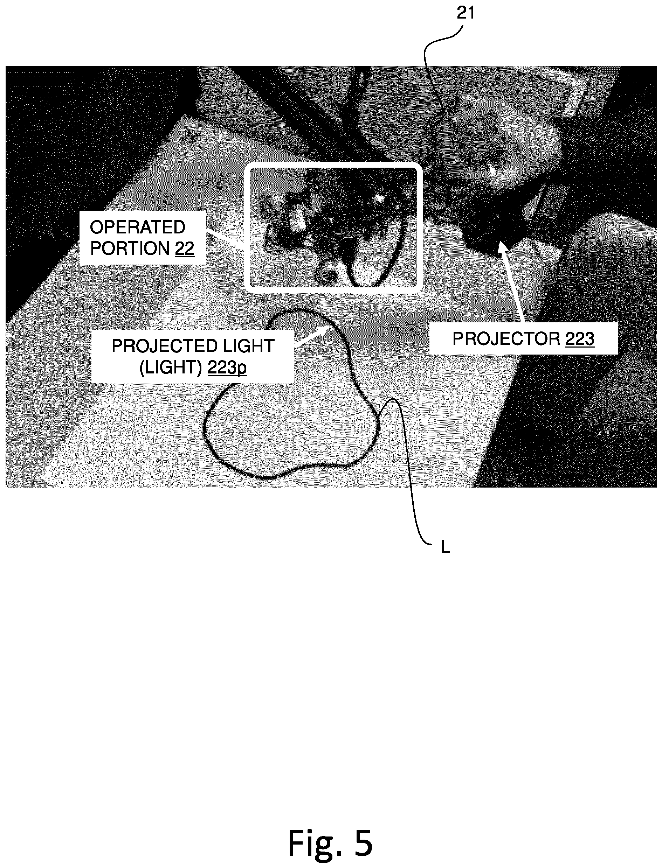

FIG. 5 is a photograph of the robot assistance system 1 according to the first embodiment. In the robot assistance system 1 according to the first embodiment, as shown in FIGS. 2A and 2B, the target position T is implemented as an intersection (center of the image IM) between the visual line of the imaging unit 222 and the defined plane P. It should be noted that the operated portion 22 is provided with the projector 223 (an example of the "guidance information presentation unit" in the claims).

Here, since the relative positions of the projector 223 and the imaging unit 222 are known at the time of design, the projector 223 can present the projected light including the information regarding the target position T. Preferably, the imaging unit 222 and the projector 223 are implemented as a coaxial optical system by using a beam splitter or the like. In any case, the projector 223 presents the projected light including the information regarding the target position T so that the user using the robot assistance system 1 can grasp the current position of the target position T (that is, the image center CT of the imaging unit 222). In FIG. 5, A rectangular frame 223p is projected on the defined plane P by the projector 223. Since the substantially center of the frame 223p is represented as the target position T, the user can intuitively grasp how the operation unit 21 should be moved in order to displace the target position T follow the predetermined trajectory.

### 3.2 Second Embodiment

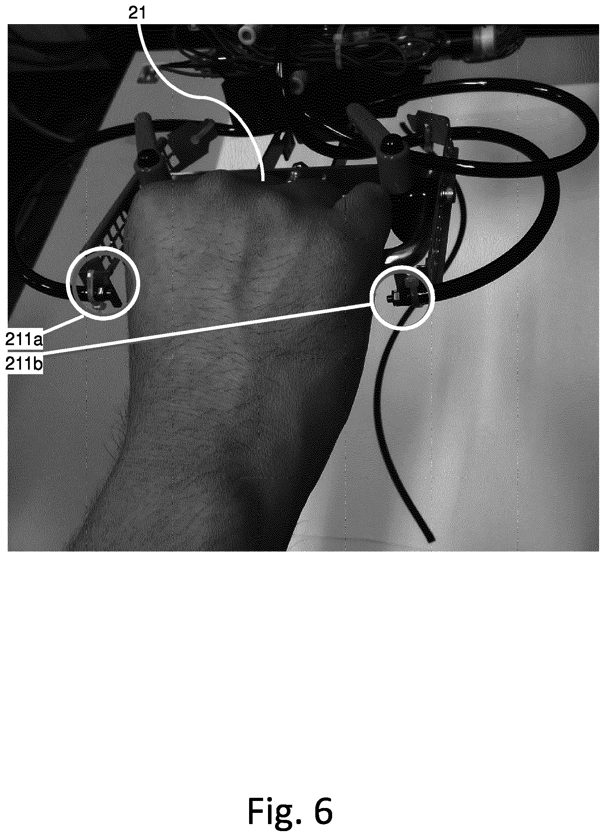

FIG. 6 is a photograph of the robot assistance system 1 according to the second embodiment. In the robot assistance system 1 according to the second embodiment, as shown in FIGS. 2A and 2B, the target position T is implemented as an intersection (center of the image IM) between the visual line of the imaging unit 222 and the defined plane P. Then, it should be noted that pressure providing devices 211a and 211b (an example of the "guidance information presenting unit" in the claims) capable of providing air pressure on both sides of the hand when the user grip the operating unit 21 are provided. Further, the range imaged by the imaging unit 222 is wider than the displaceable stroke of the driving unit 221.

As described above, the deviation between the target position T and the predetermined trajectory is measured from the image IM imaged by the imaging unit 222, and the driving unit 221 is driven to correct the deviation. On the other hand, it is conceivable that a deviation occurs so as to exceed the stroke of the drive unit 221. In the robot assistance system 1 according to the second embodiment, in such a case, air pressure is provided to the hand of the user by either the pressure providing device 211a or 211b so as to induce the user to the direction of correcting the deviation.

For example, when the user wants to induce his/her hand to the right direction while holding the operation unit 21, air pressure is provided from the pressure providing device 211a located on the left side of the hand of the user. On the other hand, when the user wants to induce his/her hand to the left direction while holding the operation unit 21, air pressure is provided from the pressure providing device 211b located on the right side of the hand of the user. In this way, air pressure is provided to the user as information regarding the target position T (information for correcting the deviation).

### 3.3 Third Embodiment

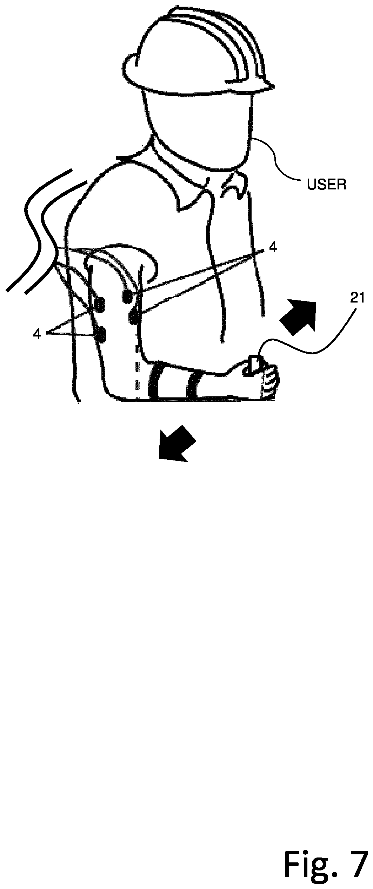

FIG. 7 is a schematic view of the robot assistance system 1 according to the third embodiment. In the robot assistance system 1 according to the third embodiment, as shown in FIGS. 2A and 2B, the target position T is implemented as an intersection (center of the image IM) between the visual line of the imaging unit 222 and the defined plane P. In the robot assistance system 1 according to the third embodiment, like the robot assistance system 1 in the second embodiment, it is configured to induce the user to the direction of correcting the deviation (information for correcting the deviation is provided to the user). Specifically, it further comprises an electrode 4 that can be worn on the arm of the user (an example of a "guidance information presenting unit" in the claims), and configured to induce the user to the direction of correcting the deviation by electrically stimulating the muscle with an electrical signal directly applied to the arm of the user from the electrode 4 (so-called myoelectric control).

### 3.4 Fourth Embodiment

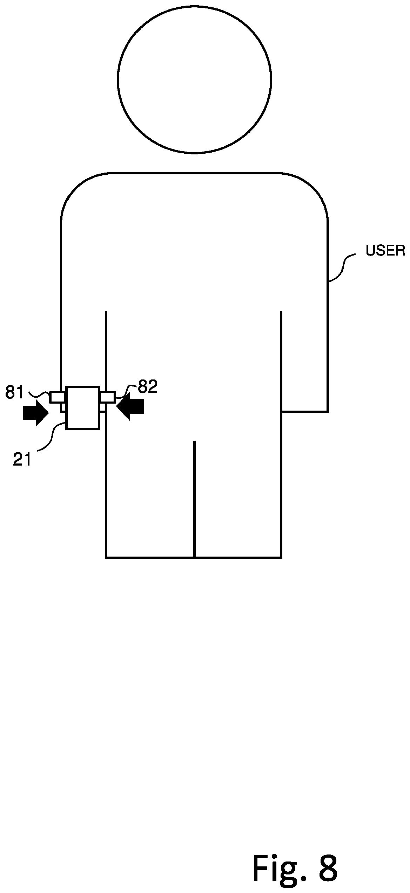

FIG. 8 is a schematic view of the robot assistance system 1 according to the fourth embodiment. In the robot assistance system 1 according to the fourth embodiment, as shown in FIGS. 2A and 2B, the target position T is implemented as an intersection (center of the image IM) between the visual line of the imaging unit 222 and the defined plane P. In the robot assistance system 1 according to the fourth embodiment, like the robot assistance system 1 in the second embodiment, it is configured to induce the user to the direction of correcting the deviation (information for correcting the deviation is provided to the user). Specifically, a force sense presentation device 81 (an example of the "guidance information presentation unit" in the claims) and a force sense presentation device 82 (the "guidance information presentation unit" in the claims) that can be worn on the finger of the user are further comprised. The force sense presentation device 81 and the force sense presentation device 82 perform wireless communication with the information processing device 3. When the force sense presentation device 81 and the force sense presentation device 82 receive the force sense value for correcting the deviation from the information processing device 3, the force sense (for example, vibration) corresponding to the force sense value is applied to the user.

For example, when the user holds the operation unit 21 with the right hand, the force sense presentation device 81 is attached to the little finger of the right hand, and the force sense presentation device 82 is attached to the thumb of the right hand. The information processing device 3 vibrates the force sense presentation device 81 when the direction for correcting the deviation is left and vibrates the force sense presentation device 82 when the direction for correcting the deviation is right.

In the fourth embodiment, the force sense presentation device 81 is attached to the finger of the user, but not limited thereto, and the force sense presenting device 81 may be attached anywhere as long as the force sense can be applied to the user. Further, although vibration is described as an example of the force sense in the fourth embodiment, the present invention is not limited to this, and any force sense for correcting the deviation can be applied.

### 4. Modifications

The robot assistance system 1 according to the first to fourth embodiments may be further creatively devised according to the following aspects.

First, in the above-described embodiments, the target position T is implemented as the intersection (center of the image IM) between the visual line of the imaging unit 222 and the defined plane P, but this is merely an example and the present invention is not limited thereto. For example, a cutting tool (for example, an end mill or a medical scalpel) can be attached to the drive unit 221 at the operated portion 22, and the tip position of the cutting tool can be set to the target position T. In these circumstances, the relative positions of the imaging unit 222 and the cutting tool are known at the time of design. According to such a modification, the user can perform cutting and medical treatment while having self-awareness.

Second, in the above-described embodiment, the target position T is implemented as the intersection (center of the image IM) between the visual line of the imaging unit 222 and the defined plane P, but this is merely an example and the present invention is not limited thereto. For example, a laser emitting unit (for processing) can be attached to the driving unit 221 at the operated portion 22, and the irradiation position (on the defined plane P) of the laser emitted from the laser emitting unit can be set to the target position T. In these circumstances, the relative positions of the imaging unit 222 and the laser emitting unit are known at the time of design. According to such a modification, the user can perform the laser processing so as to form the desired object into a defined shape while having self-awareness.

Third, in the above-described embodiment, the target position T is implemented as the intersection (center of the image IM) between the visual line of the imaging unit 222 and the defined plane P, but this is merely an example and the present invention is not limited thereto. For example, a coating portion configured to apply a coating material or the like to the driving portion 221 in the operated portion 22 can be attached, and the tip position of the coating portion can be set to the target position T. In this case, the relative positions of the imaging unit 222 and the application tool are known at the time of design. According to such a modification, the user can perform the coating process while having self-awareness.

Fourth, various objects can be considered as targets for determining the target position T, including the cutting tool, the laser emitting unit, the coating tool, and the like described above, and these can be freely attached and detached.

Fifth, the robot assistance device 2 may independently have a control unit instead of the information processing device 3. That is, the control unit in the robot assistance device 2 corresponds to the image processing unit 31 and the control signal generation unit 32 in the information processing device 3 in the embodiments described above. According to such a modification, even if the robot assistance device 2 is a single substance, it enables to extend the accuracy of human movement while completely maintaining human cognition and safety.

Sixth, the imaging unit 222 used for feedback control may be a different sensor. For example, a force sensor is considered to be effective. Information such as contact force (an example of "feature information" in the claims) is acquired by a force sensor, and the control signal generation unit 32 determines the control signal CS based on the information. It enables to extend the accuracy of human movement while completely maintaining human cognition and safety.

### 5. Conclusion

As described above, according to the present embodiments, it is possible to implement the robot assistance device 2 capable of expanding the accuracy of human movement while completely maintaining human cognition and safety.

The robot assistance device 2 comprises an operation unit 21 and an operated portion 22 that are non-electrically connected to each other, and a user can displace a target position T defined by the operated portion 22 while having self-awareness by operating the operation unit 21. The robot assistance device 2 further comprises a sensor unit (imaging unit 222, etc.) and a drive unit 221, the sensor unit is provided on the drive unit 221, and is configured to acquire a feature information regarding a predetermined trajectory (line L) about a displacement of the target position T, the drive unit 221 is provided on the operated portion 22, and is driven so as to correct a deviation of the target position T from the predetermined trajectory based on a control signal determined based on the feature information.

Further, it is possible to implement the robot assistance system 1 capable of expanding the accuracy of human movement while completely maintaining human cognition and safety.

The robot assistance system 1 comprises the above-described robot assistance device 2 and an information processing device 3. The information processing device 3 is electrically connected to the imaging unit 222 and the drive unit 221 in the robot assistance device 2 and determines the value of the control signal to the drive unit 221 based on the feature information acquired from the imaging unit 222 and drive the drive unit 221 based on the value.

Further, the present invention may be provided by each of the following embodiments.

In the device, a guidance information presentation unit configured to present information regarding the target position to the user is further comprised.

In the device, the guidance information presentation unit includes a projector in which a coaxial or relative position is fixed to the sensor unit and is configured to present the information regarding the target position as a projected light.

In the device, the guidance information presentation unit includes a pressure providing device provided on the operation unit and is configured to present the information regarding the target position as a pressure to the user.

In the device, the guidance information presentation unit includes an electrode configured to be wearable to the user and is configured to present the information regarding the target position to the user by electrically stimulating the muscle of the user.

In the device, the guidance information presentation unit is configured to present the information regarding the target position as a force sense to the user.

In the device, the information regarding the target position is information for correcting the deviation of the target position from the predetermined trajectory.

In the device, an immovable unit and a passive joint are further comprised, wherein the immovable unit is connected to the operation unit or the operated portion via the passive joint, thereby the position of the operated portion can be variable while the immovable unit is immobile.

In the device, the sensor unit is an imaging unit configured to capture external information.

In the device, the target position is a center of an image captured by the imaging unit.

In the device, a cutting tool, a coating tool, or a laser emitting unit is provided on the drive unit, and the target position is a tip position of the cutting tool or the coating tool, or an irradiation position of the laser emitted from the laser emitting unit.

In the device, an acquisition rate of the sensor unit and a drive rate of the drive unit are 250 hertz or more.

In the device, a control unit configured to determine a value of the control signal to the drive unit based on the feature information acquired from the sensor unit and to drive the drive unit based on the value is further comprised.

A robot assistance system comprises the robot assistance device and an information processing device, wherein the information processing device is electrically connected to the sensor unit and the drive unit in the robot assistance device, and the information processing device is configured to determine the value of the control signal to the drive unit based on the feature information acquired from the sensor unit and to drive the drive unit based on the value.

Of course, the above embodiments are not limited thereto.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

The above-described embodiments and modifications can be freely combined.

### REFERENCE SIGNS LIST

- 1: Robot assistance system
- 2: Robot assistance device
- 21: Operation Unit
- 221a: Pressure providing device
- 221b: Pressure providing device
- 22: Operated portion
- 221: Drive unit
- 222: Imaging unit
- 223: Projector
- 223p: Frame
- 23: Passive joint
- 23a: Passive joint
- 23b: Passive joint
- 23c: Passive joint
- 24: Immovable unit
- 3: Information processing device
- 31: Image processing unit
- 32: Control signal generation unit
- 4: Electrode
- CS: Control signal
- IM: Image
- L: Line
- P: Defined plane
- ROI: Predetermined region
- T: Target position

## Claims

1. A robot assistance device, comprising:
an operation unit and an operated portion that are non-electrically connected to each other, wherein:
a user is able to displace a target position defined by the operated portion while having self-awareness by operating the operation unit;
a sensor unit provided on a drive unit and configured to acquire a feature information regarding a predetermined trajectory about a displacement of the target position, and
the drive unit provided on the operated portion and configured to be driven so as to correct a deviation of the target position from the predetermined trajectory based on a control signal determined based on the feature information.

2. The device according to Claim 1, further comprising:
a guidance information presentation unit configured to present information regarding the target position to the user.

3. The device according to Claim 2, wherein:
the guidance information presentation unit includes a projector in which a coaxial or relative position is fixed to the sensor unit and is configured to present the information regarding the target position as a projected light.

4. The device according to Claim 2 or 3, wherein:
the guidance information presentation unit includes a pressure providing device provided on the operation unit and is configured to present the information regarding the target position as a pressure to the user.

5. The device according to any one of Claims 2 to 4, wherein:
the guidance information presentation unit includes an electrode configured to be wearable to the user and is configured to present the information regarding the target position to the user by electrically stimulating the muscle of the user.

6. The device according to any one of Claims 2 to 5, wherein:
the guidance information presentation unit is configured to present the information regarding the target position as a force sense to the user.

7. The device according to any one of Claims 4 to 6, wherein:
the information regarding the target position is information for correcting the deviation of the target position from the predetermined trajectory.

8. The device according to any one of Claims 1 to 7, further comprising:
an immovable unit and a passive joint, wherein the immovable unit is connected to the operation unit or the operated portion via the passive joint, thereby the position of the operated portion can be variable while the immovable unit is immobile.

9. The device according to any one of Claims 1 to 8, wherein:
the sensor unit is an imaging unit configured to capture external information.

10. The device according to Claim 9, wherein:
the target position is a center of an image captured by the imaging unit.

11. The device according to any one of Claims 1 to 10, wherein:
a cutting tool, a coating tool, or a laser emitting unit is provided on the drive unit, and
the target position is a tip position of the cutting tool or the coating tool, or an irradiation position of the laser emitted from the laser emitting unit.

12. The device according to any one of Claims 1 to 11, wherein:
an acquisition rate of the sensor unit and a drive rate of the drive unit are 250 hertz or more.

13. The device according to any one of Claims 1 to 12, further comprising:
a control unit configured to determine a value of the control signal to the drive unit based on the feature information acquired from the sensor unit and to drive the drive unit based on the value.

14. A robot assistance system, comprising:
the robot assistance device according to any one of Claims 1 to 13, and an information processing device, wherein:
the information processing device is electrically connected to the sensor unit and the drive unit in the robot assistance device, and
the information processing device is configured to determine the value of the control signal to the drive unit based on the feature information acquired from the sensor unit and to drive the drive unit based on the value.
